# EUROPEAN PATENT SPECIFICATION

(11) **EP 3 741 681 B1**
(45) Date of publication and mention of the grant of the patent: **30.03.2022**
(21) Application number: 19461543.1
(22) Date of filing: 24.05.2019
(51) Int. Cl.: B64D 41/00

(54) **LOCKING AND UNLOCKING MECHANISM**
VERRIEGELUNGS- UND ENTRIEGELUNGSMECHANISMUS
MÉCANISME DE VERROUILLAGE ET DE DÉVERROUILLAGE

(43) Date of publication of application: 25.11.2020
(73) Proprietor: Hamilton Sundstrand Corporation, Charlotte, NC 28217 (US)
(72) Inventor: SOBOLAK, Piotr, 76-200 Slupsk (PL); KIELCZYKOWSKI, Przemyslaw, 51-319 Wroclaw (PL)
(74) Representative: Dehns

(56) References cited:
- EP-A1- 3 196 127
- US-A- 3 073 643

## Description

### TECHNICAL FIELD

The present disclosure relates to locking/unlocking mechanisms for deployable components. The mechanism is particularly suitable as an unlocking mechanism for a ram air turbine (RAT) actuator but could also find application in other deployable or movable systems such as other actuators, valves, pumps and the like.

### BACKGROUND

Many systems and mechanisms are known in which a component is movable between a closed or stowed position and an open or deployed position, and wherein a component should be locked in the desired position and unlocked to permit movement between the positions. Particular examples are valves or actuators, such as RAT actuators as described in more detail below.

Ram air turbines are used in aircraft to provide electric and/or hydraulic power to components of the aircraft, for example in the event of failure of other electrical or hydraulic power generating equipment on board the aircraft. In normal operation of the aircraft, the RAT is housed within the aircraft, but when needed it is extended into the airflow around the aircraft such that it may turn, due to the airflow, and generates electrical and/or hydraulic power. The RAT is typically pivoted into position by means of an actuator, for example a hydraulic actuator. The actuator typically includes a bolt which extends to deploy the RAT. The actuator has a lock mechanism which prevents inadvertent movement of the bolt and, thus, inadvertent deployment of the RAT. The main locking mechanism typically comprises a spring loaded lock bolt which must be moved in an axial direction to unlock the actuator. Locking mechanisms are known from US2013/0327207, US2017/0260906, US 2017/0259934 and EP 3196127. RAT actuators are also disclosed in US 8,640,563, US 9,193,472, US 2015/0232195 and US 2015/0096437.

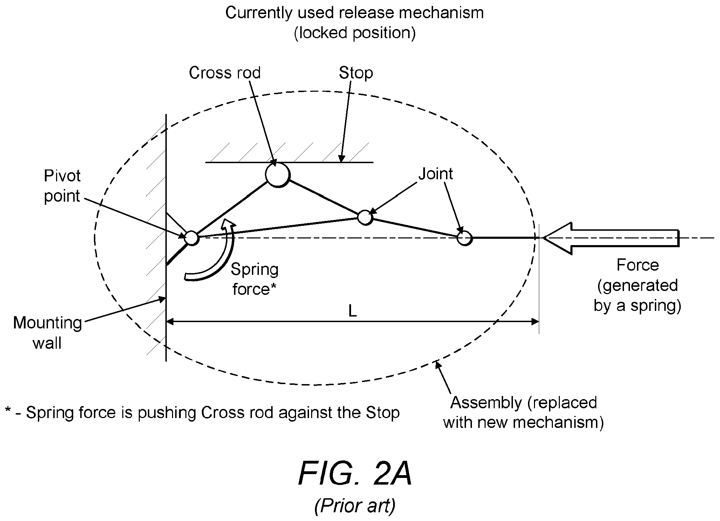

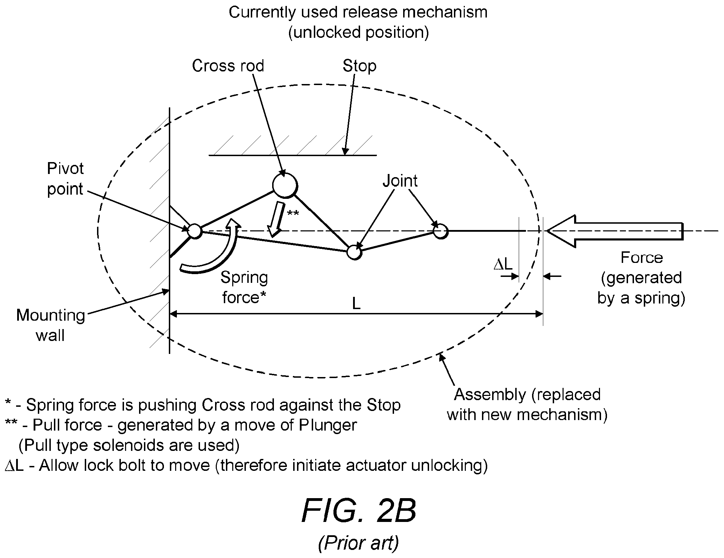

An unlocking mechanism is provided to permit the axial bolt movement. A conventional unlocking mechanism is shown, for example, in Figs. 2A and 2B, comprising a linkage arrangement, one end of which is rotatably coupled to one end of the lock bolt and the other end of which is axially fixed and rotatably coupled to, for example, a mounting wall. A solenoid moves the link between a locked (FIG. 2A) and an unlocked (FIG. 2B) position by moving a cross-rod extending through the linkage arrangement. In the locked position, the linkage arrangement is blocked in a position to push against the lock bolt against the force of the lock bolt spring to prevent axial movement of the bolt. When it is required to deploy the RAT, the bolt needs to be released for axial movement of the actuator. As seen in Fig. 2B, a pull force is exerted on the cross-rod and hence the linkage arrangement by means of a solenoid, which moves the linkage assembly out of engagement with the bolt. This allows the lock bolt to move axially to initiate actuator unlocking to permit deployment. The solenoid must have sufficient force to displace the lock bolt against the force of the lock bolt spring and the linkages and joints require sufficient axial and radial space and may also be prone to wear or damage.

The size and weight of components is of particular concern in aircraft where there is a desire to use lighter and smaller components, whilst maintaining safety and reliability.

One problem with such mechanisms is that they are very sensitive and must be accurately manufactured. Additional shimming is required in order to meet test procedure requirements and a stop has to be built into the mechanism to prevent the toggle tipping too far past the overcentre point.

There is, therefore, a need for a new locking mechanism that avoids these problems in the form of a simple, less expensive, less sensitive, but reliable mechanism.

### SUMMARY

According to one aspect, the disclosure provides a locking mechanism comprising a linkage assembly comprising: a first link and a second link joined at a pivot point; a linkage assembly spring to bias the linkage assembly into a first, locked, position; a rotational rod having a cam formed thereon with a cam surface in engagement with the linkage assembly in the region of the pivot point; a solenoid assembly arranged, in a first mode, to rotate the rotational rod such that the cam acts as a stop against the linkage assembly at the pivot point in a locked position, and, in a second mode to rotate the rotational rod such that the cam surface presses against the linkage assembly sufficiently to overcome the bias force of the linkage assembly spring and to force the linkage assembly into a second, unlocked position.

In other aspects, the disclosure provides an actuator lock bolt assembly, an actuator assembly and a ram air turbine assembly incorporating such a mechanism.

### BRIEF DESCRIPTION OF THE DRAWINGS

Preferred embodiments will now be described by way of example only and with reference to the accompanying drawings in which:
Figure 1 shows a ram air turbine (RAT);
Figure 2A shows a schematic view of a known linkage release mechanism, as described above, in the locked position;
Figure 2B shows the mechanism of Fig. 2A in the unlocked position;
Fig. 3A is a perspective view of a locking mechanism according to the disclosure in the locked position.
Fig. 3B is a perspective view of the locking mechanism of Fig. 3A in the unlocking position.
Fig. 4 is an exploded view of the locking mechanism.
Fig. 5A is a simple diagram showing the positions of the mechanism components in the locked position.
Fig. 5B is a simple diagram showing the positions of the mechanism components in the unlocking position.
Fig. 6A is a cut-away view showing the positions of the mechanism components in the locked position.
Fig. 6B is a cut-away view showing the positions of the mechanism components in the unlocking position.

### DETAILED DESCRIPTION

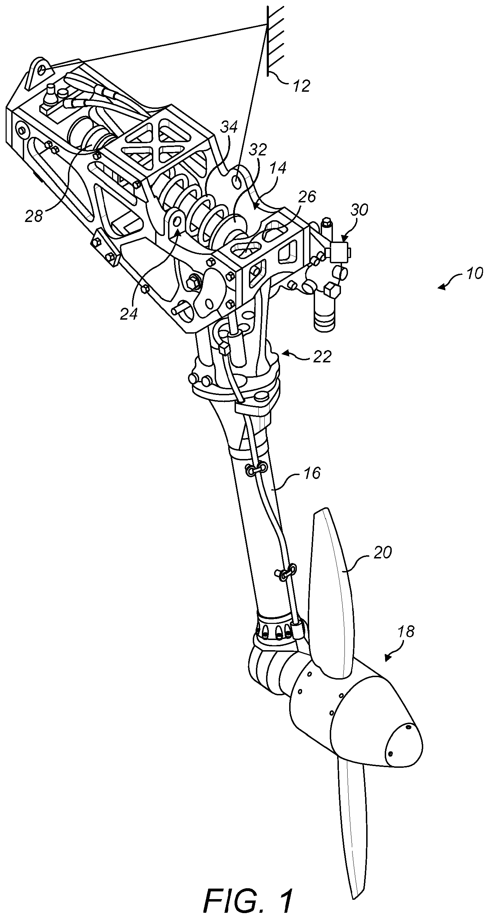

Figure 1 shows a RAT system 10 which is secured to an aircraft structure 12 by housing 14. The housing 14 pivotally supports a strut 16 having a turbine 18 at one end. The turbine 18 includes blades 20 which impart rotational drive to a generator 22 and a hydraulic pump 30, for example. An actuator 24 is secured to the strut at a first end 26 and to the housing at a second end 28. The actuator 24 is illustrated in its deployed position. The actuator 24 comprises a cylinder 32 which is biased by a spring 34 in order to deploy the strut 16. When the cylinder 32 is retracted, it is held in its retracted position by means of a locking mechanism, details of which will be described below.

The unlocking of the actuator is initiated by permitting movement of a lock bolt. This is made possible by means of a release (or unlocking) mechanism according to the present disclosure which will be described further below.

In existing systems mentioned above, and shown in Figures 2A and 2B, pivoting of the toggle mechanism is permitted or prevented by means of the cross rod, that passes through the toggle mechanism, moved by the solenoids. A stop is required to prevent the toggle mechanism rotating further than desired.

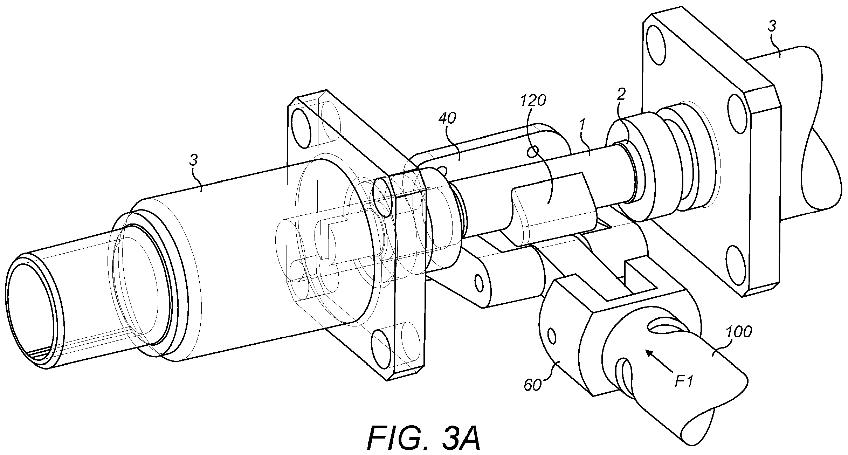

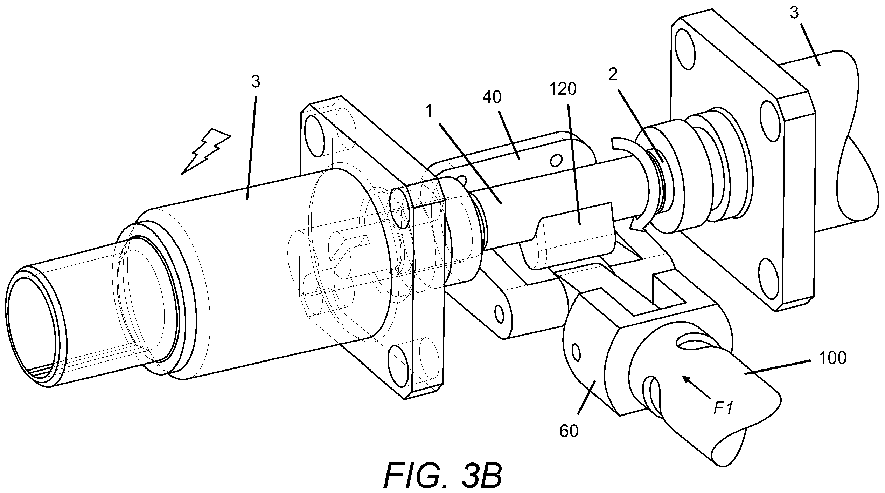

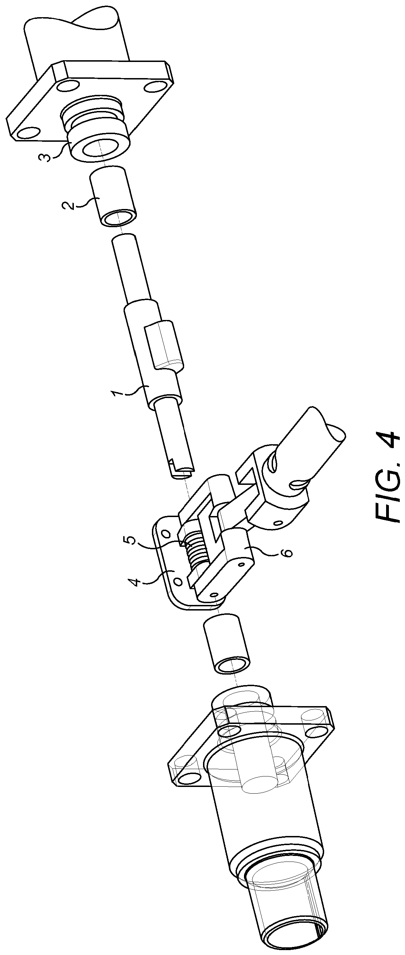

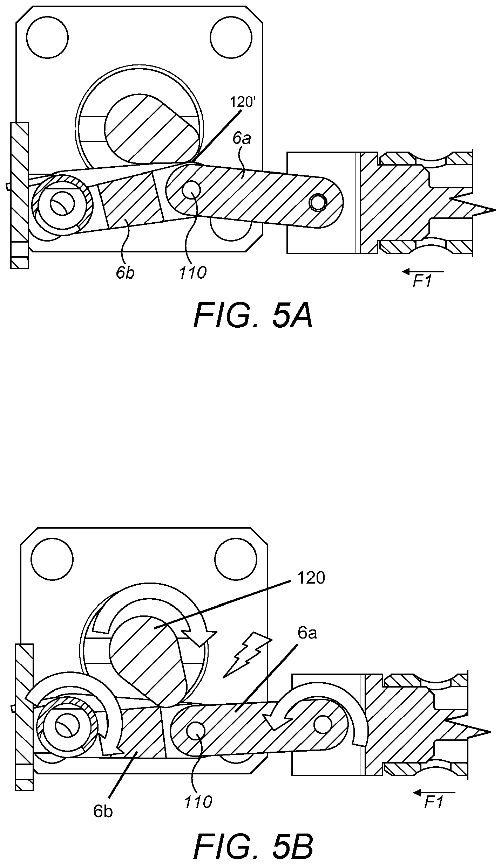

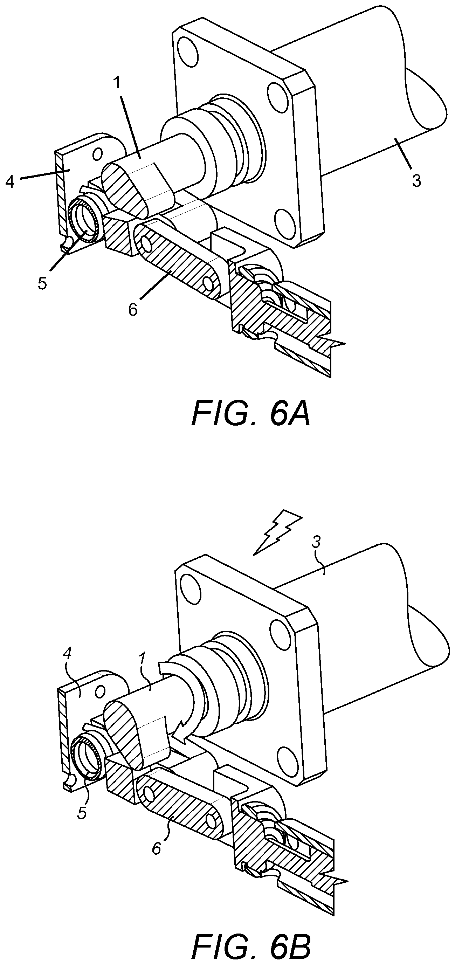

Referring to Figures 3 to 6, the locking mechanism of the present disclosure comprises a lock bolt 100 that acts on the toggle mechanism 60 with the force F1 of a lock bolt spring (not shown). The force of the spring pushing against the toggle mechanism is biased to push the pivot point 110 to an overcentre position so that the toggle mechanism is not completely extended, and abuts against a cam 120 surface (120'), thus locking movement of the lock bolt. If the actuator is to be moved, the locking mechanism needs to act against this overcentering to keep the links of the toggle mechanism extended at the pivot point 110.

The present invention replaces the cross rod of the prior art, passing through an aperture in the toggle mechanism, with a rotational rod or plunger 1 provided with a cam feature 120. The cam feature functions to block the toggle mechanism in the overcentre position when required and also to move the toggle mechanism to the undercentre position to permit movement of the actuator piston.

The rotational rod 1 is located at each end in a respective solenoid 3. Preferably the rod ends are mounted in bearing sleeves 2, preferably made of PTFE. The solenoids are preferably rotational solenoids arranged to rotate the rod 1.

One end of the toggle mechanism is engaged with the lock bolt. The other is attached to the inner wall of the actuator housing e.g. via a fixed clevis 40. The clevis 40 provides the pivot axis for the toggle mechanism and a return spring 5 that allows the toggle mechanism to return from the undercentre to the overcentre position.

In the locked position, shown in Figs. 3A, 4A, 5A and 6A, the solenoids are de-energised and so the cam 120 is in its neutral position. The lock bolt spring force F1 causes the lock bolt to push against the toggle mechanism links causing the mechanism to pivot upwards at pivot point 110. The cam 120 acts as a stop to prevent the toggle mechanism pivoting too far past the overcentre position.

To unlock the lock bolt (Figs. 3A, 4A, 5A, 6A) the solenoid(s) (either both or just one) 3 are energised causing the rotating rod 1 to rotate in the direction of the arrow in Fig. 3B which, in turn, rotates the cam 120 causing it to push against the toggle links pushing the pivot point 110 down and moving it to a neutral or undercentre position. This allows the lock bolt to move against the force F1 of the spring to unlock the actuator. To lock the actuator in this position, the spring force F1 can be removed.

The release mechanism of the present disclosure provides improved operation of the linkage mechanism as compared to the arrangement of Figs. 2A and 2B. The release mechanism operates on the same type of linkage assembly as shown in Figs. 2A and 2B and has the same objective, i.e. to cause a downward movement of the linkage assembly to permit axial movement of the lock bolt.

In the known systems, a pull-type solenoid actively pulls the cross-rod out of engagement with the stop against the spring force causing the linkage assembly to move away from, and hence release, the bolt. In contrast, in the arrangement of the present disclosure, a cam on a rotational rod is rotated by a solenoid to either lock the links in the locked position or push the links into the unlocking position.

As described above, in prior art arrangements, a cross-rod passing through the linkage assembly abuts against a stop to prevent movement of the lock bolt; to unlock the bolt, a pull solenoid acts against the spring force biasing the cross-rod towards the stop, to pull the cross-rod away from the stop, causing the linkage assembly to move out of engagement with, and permit axial movement of the lock bolt.

The present disclosure replaces the cross-rod with a cam formed on a rotational rod to cause the movement of the linkage assembly into and out of locking engagement with the lock bolt.

The example shown comprises two solenoids. It is also possible to have one or perhaps even more than two solenoids arranged on either side of the rotational rod to provide redundancy and extra engagement force. If two solenoids are used, the release mechanism reacts more quickly, and meets the requirements of aviation regulations for the duplication of critical systems.

In the examples described, in the locked position, the solenoid is de-energised. In an alternative embodiment the solenoid could be in the locked position when the solenoid was energised and in the unlocked position when the solenoid is de-energised.

This mechanism could be easily adapted to existing actuators.

When the RAT is to be retracted to the stowed position, the lock bolt is moved in the opposition direction.

The above is a description of a single embodiment by way of example only. Modifications may be made without departing from the scope of the invention as defined by the claims.

While the apparatus has been described in the context of unlocking a RAT actuator, it may, as mentioned above, find use in other applications, for example of the types of actuator, valves, pumps or the like.

## Claims

1. A locking mechanism comprising a linkage assembly (6) comprising:
a first link (6a) and a second link (6b) joined at a pivot point (110); and
a linkage assembly spring (5) to bias the linkage assembly into a first, locked, position; and **characterised by**:
a rotational rod (1) having a cam (120) formed thereon with a cam surface (120') in engagement with the linkage assembly in the region of the pivot point (110);
a solenoid assembly (3) arranged, in a first mode, to rotate the rotational rod (1) such that the cam acts as a stop against the linkage assembly at the pivot point in a locked position, and, in a second mode to rotate the rotational rod such that the cam surface presses against the linkage assembly sufficiently to overcome the bias force of the linkage assembly spring and to force the linkage assembly into a second, unlocked position.

2. The locking mechanism of claim 1, wherein said solenoid assembly in the first mode is de-energized and, in the second mode, is energized.

3. The locking mechanism of claim 1, wherein said solenoid assembly in the first mode is energized and, in the second mode, is de-energized.

4. An actuator lock bolt assembly comprising a lock bolt movable between an actuator locking position and an actuator release position and a locking mechanism as claimed in any preceding claim, arranged to secure the lock bolt in the actuator locking position in the first mode and to release the lock bolt to the actuator release position in the second mode, movement of the lock bolt being permitted in response to the linkage assembly being forced to the unlocked position.

5. An actuator assembly comprising an actuator and an actuator lock bolt assembly as claimed in claim 4, the actuator movable between a non-actuating position and an actuating position responsive to the lock bolt moving between the actuator locking position and the actuator release position.

6. A ram air turbine assembly comprising a ram air turbine and an actuator assembly as claimed in claim 5, the ram air turbine being movable between a stowed position and a deployed position responsive to the actuator moving between the actuating and the non-actuating position.

## Patentansprüche

1. Verriegelungsmechanismus, der eine Verbindungsbaugruppe (6) umfasst, Folgendes umfassend:
ein erstes Verbindungsstück (6a) und ein zweites Verbindungsstück (6b), die an einem Drehpunkt (110) verbunden sind; und
eine Verbindungsbaugruppenfeder (5), um die Verbindungsbaugruppe in eine erste, verriegelte, Position vorzuspannen; und **gekennzeichnet durch**:
einen Drehstab (1), der eine Nocke (120) aufweist, die daran ausgebildet ist, wobei eine Nockenfläche (120') im Bereich des Drehpunkts (110) im Eingriff mit der Verbindungsbaugruppe steht;
eine Magnetbaugruppe (3), die so ausgelegt ist, dass sie in einem ersten Modus den Drehstab (1) so dreht, dass die Nocke wie ein Anschlag gegen die Verbindungsbaugruppe an dem Drehpunkt in einer verriegelten Position wirkt, und in einem zweiten Modus den Drehstab so dreht, dass die Nockenfläche ausreichend gegen die Verbindungsbaugruppe drückt, um die Vorspannkraft der Verbindungsbaugruppenfeder zu überwinden und die Verbindungsbaugruppe in eine zweite, unverriegelte Position zu drängen.

2. Verriegelungsmechanismus nach Anspruch 1, wobei die Magnetbaugruppe in dem ersten Modus unerregt ist und in dem zweiten Modus erregt ist.

3. Verriegelungsmechanismus nach Anspruch 1, wobei die Magnetbaugruppe in dem ersten Modus erregt ist und in dem zweiten Modus unerregt ist.

4. Aktuatorverriegelungsbolzenbaugruppe, einen Verriegelungsbolzen, der zwischen einer Aktuatorverriegelungsposition und einer Aktuatorfreigabeposition beweglich ist, und einen Verriegelungsmechanismus nach einem der vorstehenden Ansprüche umfassend, die so angeordnet ist, dass sie den Verriegelungsbolzen in der Aktuatorverriegelungsposition in dem ersten Modus fixiert und den Verriegelungsbolzen in die Aktuatorfreigabeposition in dem zweiten Modus freigibt, wobei eine Bewegung des Verriegelungsbolzens als Reaktion darauf ermöglicht wird, dass die Verbindungsbaugruppe in die unverriegelte Position gedrängt wird.

5. Aktuatorbaugruppe, einen Aktuator und eine Aktuatorverriegelungsbolzenbaugruppe nach Anspruch 4 umfassend, wobei der Aktuator zwischen einer Nichtbetätigungsposition und einer Betätigungsposition als Reaktion darauf, dass sich der Verriegelungsbolzen zwischen der Aktuatorverriegelungsposition und der Aktuatorfreigabeposition bewegt, bewegbar ist.

6. Stauluftturbinenbaugruppe, eine Stauluftturbine und eine Aktuatorbaugruppe nach Anspruch 5 umfassend, wobei die Stauluftturbine zwischen einer eingefahrenen Position und einer ausgefahrenen Position als Reaktion darauf, dass sich der Aktuator zwischen der Betätigungs- und der Nichtbetätigungsposition bewegt, bewegbar ist.

## Revendications

1. Mécanisme de verrouillage comprenant un ensemble liaison (6) comprenant :
une première liaison (6a) et une seconde liaison (6b) jointes au niveau d'un point de pivotement (110) ; et
un ressort d'ensemble liaison (5) pour solliciter l'ensemble liaison dans une première position verrouillée ; et **caractérisé par** :
une tige rotative (1) ayant une came (120) formée dessus avec une surface de came (120') en prise avec l'ensemble liaison dans la région du point de pivotement (110) ;
un ensemble solénoïde (3) agencé, dans un premier mode, pour faire tourner la tige rotative (1) de sorte que la came agit comme une butée contre l'ensemble liaison au niveau du point de pivotement dans une position verrouillée, et, dans un second mode, pour faire tourner la tige rotative de sorte que la surface de came appuie suffisamment contre l'ensemble liaison pour surmonter la force de sollicitation du ressort de l'ensemble liaison et pour forcer l'ensemble liaison dans une seconde position déverrouillée.

2. Mécanisme de verrouillage selon la revendication 1, dans lequel ledit ensemble solénoïde dans le premier mode est désexcité et, dans le second mode, est excité.

3. Mécanisme de verrouillage selon la revendication 1, dans lequel ledit ensemble solénoïde dans le premier mode est excité et, dans le second mode, est désexcité.

4. Ensemble boulon de verrouillage d'actionneur comprenant un boulon de verrouillage mobile entre une position de verrouillage d'actionneur et une position de libération d'actionneur et un mécanisme de verrouillage selon une quelconque revendication précédente, agencé pour fixer le boulon de verrouillage dans la position de verrouillage d'actionneur dans le premier mode et pour libérer le boulon de verrouillage vers la position de libération d'actionneur dans le second mode, le mouvement du boulon de verrouillage étant autorisé en réponse au fait que l'ensemble liaison est forcé vers la position déverrouillée.

5. Ensemble actionneur comprenant un actionneur et un ensemble boulon de verrouillage d'actionneur selon la revendication 4, l'actionneur pouvant se déplacer entre une position de non-actionnement et une position d'actionnement en réponse au déplacement du boulon de verrouillage entre la position de verrouillage d'actionneur et la position de libération d'actionneur.

6. Ensemble turbine à air dynamique comprenant une turbine à air dynamique et un ensemble actionneur selon la revendication 5, la turbine à air dynamique étant mobile entre une position repliée et une position déployée en réponse au déplacement de l'actionneur entre la position d'actionnement et la position de non-actionnement.
